# EUROPÄISCHE PATENTSCHRIFT

(11) **EP 2 686 328 B1**
(45) Veröffentlichungstag und Bekanntmachung des Hinweises auf die Patenterteilung: **01.10.2014**
(21) Anmeldenummer: 12708135.4
(22) Anmeldetag: 09.03.2012
(51) Int. Cl.: C07F 7/18

(54) **KONTINUIERLICHES VERFAHREN ZUR HERSTELLUNG SIOC-ENTHALTENDER VERBINDUNGEN**
CONTINUOUS PROCESS FOR THE PRODUCTION OF SIOC-CONTAINING COMPOUNDS
PROCÉDÉ CONTINU POUR LA PRODUCTION DES COMPOSÉS CONTENANT SIOC

(30) Priorität: 15.03.2011 DE 102011005581
(43) Veröffentlichungstag der Anmeldung: 22.01.2014
(73) Patentinhaber: Wacker Chemie AG, 81737 München (DE)
(72) Erfinder: STANJEK, Volker, 84539 Ampfing (DE); IMLINGER, Nicolas, A-5120 St. Pantaleon (AT); WESTERMAYER, Heribert, 84489 Burghausen (DE); WEWERS, Wolfgang, 84489 Burghausen (DE)
(74) Vertreter: Fritz, Helmut
(86) Internationale Anmeldenummer: PCT/EP2012/054108
(87) Internationale Veröffentlichungsnummer: WO 2012/123356

(56) Entgegenhaltungen:
- EP-A1- 1 686 132
- EP-A2- 1 205 505

## Beschreibung

Die Erfindung betrifft ein kontinuierliches Verfahren zur Herstellung SiOC-enthaltender Verbindungen, vorzugsweise zur Herstellung von Alkoxysilanen und alkoxyreicher Siliconharze.

Bei diesem meist als "Alkoxylierung" bezeichneten Verfahren wird von den entsprechenden Chlorsilanen ausgegangen, deren siliciumgebundenen Chloratome gegen Alkoxygruppen ausgetauscht werden. Dies gelingt durch eine Umsetzung der Chlorsilane mit dem jeweiligen Alkohol oder aber einem Alkohol-Wassergemisch unter Freisetzung von Salzsäure. Wird der reine Alkohol eingesetzt, werden dabei Alkoxysilane erhalten, wohingegen die Verwendung von Alkohol-Wasser-Gemischen zu der Bildung alkoxyfunktionellen Siloxanen führt. Dabei kann die mittlere Molekülmasse der entstehenden Siloxane über den Wassergehalt der eingesetzten Alkohol-Wassermischungen nahezu beliebig variiert werden.

Aus Kostengründen ist es dabei wünschenswert, die Alkoxylierung in einem kontinuierlichen Prozess durchzuführen. Entsprechende Verfahren sind bereits bekannt und beispielsweise in EP 1205505 oder EP 1686132 sowie den dort zitierten Literaturstellen beschrieben.

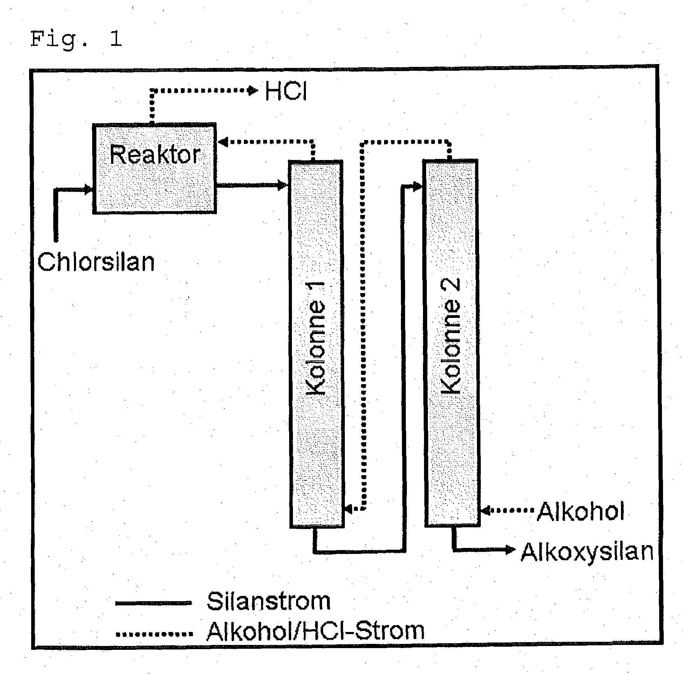

Diese Alkoxylierungsverfahren werden typischerweise in Anlagen durchgeführt, die aus einem (Vor-)Reaktor und ein oder zwei Kolonnen für eine Reaktivdestillation bestehen. Fig. 1 zeigt eine schematische Darstellung der Anlage für das in EP 1686132 beschriebene kontinuierliche Alkoxylierungs-Verfahren. Die in Fig. 1 dargestellte Kolonne 2 ist dabei prinzipiell optional, zur Erreichung einer Produktqualität, die nur noch einen geringen Anteil an siliciumgebundenen Chloratomen enthält ist der Einsatz der zweiten Kolonne jedoch vorteilhaft.

In einer derartigen Anlage werden Alkohol und Chlorsilan in einem Gegenstromprinzip miteinander in Kontakt gebracht. So wird das Chlorsilan zunächst in einem vorgeschalteten Reaktor mit einer bezogen auf die Chloratome meist unterstöchiometrischen Menge Alkohol in Kontakt gebracht, wobei sich ein teilweise alkoxyliertes Silanprodukt und gasförmiger Chlorwasserstoff bildet. Der Alkohol kann dabei direkt zugesetzt werden oder aber (in mehr oder weniger salzsäurehaltiger Form) aus der Kolonne 1 oder auch Kolonne 2 stammen. Der Chlorwasserstoff wird als Abgas aus der Anlage entfernt, wohingegen das Silan in die Kolonne 1 überführt und dort im oberen Kolonnenteil oder sogar am Kolonnenkopf eingespeist wird.

In Kolonne 1 fließt das Silan von oben nach unten, wohingegen der jeweilige Alkohol am Fuß der Kolonne über einen Umlaufverdampfer verdampft und in gasförmiger Form in Gegenrichtung bewegt wird. Die Kolonne 1 bietet dabei durch Füllkörpereinsätze eine große Oberfläche zwischen gasförmiger und flüssiger Phase, so dass es zu einem intensiven Kontakt zwischen Silan und Alkohol kommt. Dadurch können die noch vorhandenen siliciumgebundenen Chloratome gegen Alkoxygruppen ausgetauscht werden. Das deutlich chlorärmere Silan wird schließlich aus dem Destillationssumpf des Umlaufverdampfers abgeführt, wohingegen der entsprechend salzsaure Alkohol am Kopf der Kolonne 1 anfällt.

Der saure Alkohol kann weiter in den Reaktor geleitet werden, wohingegen das Silan je nach Reinheit direkt als Endprodukt verwertet oder aber in Kolonne 2 überführt werden kann.

Die Kolonne 2 funktioniert dabei nach einem identischem Prinzip wie die Kolonne 1 und dient - sofern notwendig - einer weiteren Abreicherung von siliciumgebundenen Chloratomen in der Silanphase. Das über Kopf erhaltene Alkohol-Salzsäure-Gemisch kann dabei weiter in die Kolonne 1 oder alternativ auch direkt in den Reaktor geleitet werden.

Dabei ist es möglich, die gesamte für den Prozess benötigte Alkoholmenge bereits am Fuß von Kolonne 2 einzusetzen und dem Silanstrom durch beide Reaktionskolonnen hindurch entgegen zu führen. Ebenso kann ein Teil des Prozessalkohols aber auch erst an anderen Stellen, z.B. am Fuß oder aber verschiedenen Dosierpunkten von Kolonne 1 oder auch erst im Reaktor zugesetzt werden.

Selbstverständlich ist es ebenfalls möglich, diesen Prozess nicht mit dem reinen Alkohol sondern stattdessen mit einem Alkohol-Wassergemisch durchzuführen. Das Wasser substituiert dabei gleich zwei Chloratome an unterschiedlichen Siliciumatomen, so dass letztendlich eine Siloxaneinheit entsteht. Anstelle von monomeren Alkoxysilanen werden somit oligomere alkoxygruppenreiche Siloxane erhalten. An dem oben dargestellten Prozessprinzip ändert sich dadurch jedoch nichts.

Bei diesem kontinuierlichen Prozess ist es wünschenswert, eine möglichst vollständige Umsetzung zu erreichen, dito, ein Produkt zu erhalten, das keine bzw. nur noch möglichst wenige siliciumgebundene Chloratome enthält. So wären am Siliciumatom verbleibende Chloratome leicht durch andere Verbindungen mit aktivem Wasserstoff substituierbar, weshalb es in folgenden Synthesestufen und/oder Anwendungen der jeweiligen Produkte zu einer Chlorid- bzw. Salzsäurefreisetzung käme, die sich fast immer massiv störend auswirken würde. Zwar sind Verfahren zur Nachbearbeitung von Alkoxysilanen und/oder Alkoxysiloxanen mit am Silicium verbliebenen Chloridresten bekannt, z.B. aus EP 0999215 oder EP 0997468, jedoch sind jedwede Nachbearbeitungen mit zusätzlichen Prozessschritten verbunden. Aus Kostengründen ist es daher in jedem Falle vorteilhaft, wenn der Alkoxylierungsprozess direkt zu Alkoxysilanen und/oder Alkoxysiloxanen mit hinreichend niedrigem Gehalt an siliciumgebundenen Chloratomen führt.

Neben einer möglichst vollständigen Entfernung des siliciumgebundenen Chlors ist selbstverständlich ebenfalls erstrebenswert, den dafür benötigten Alkohol bzw. das dafür benötigte Alkohol-Wassergemisch nicht oder nur geringfügig überstöchiometrisch einzusetzen und dementsprechend möglichst reinen Chlorwasserstoff als Coprodukt zu gewinnen. Dies gilt umso mehr, als dass im Überschuss eingesetzter Alkohol natürlich nicht rein, sondern als Mischung mit Chlorwasserstoff anfällt. In diesem saueren Alkohol kommt es bereits bei Raumtemperatur zu einer nucleophilen Substitution der alkoholischen Hydroxylgruppe durch das Chlorid. D.h. es bilden sich die entsprechenden Chloralkane und Wasser. Eine Aufarbeitung dieser komplexen Mischungen aus Alkohol, Chloralkan, Wasser und Chlorwasserstoff mit dem Ziel, wieder einsetzbare Wertstoffe zu erhalten, ist meist sehr aufwändig und wenig rentabel.

Das Ziel, ohne größere Alkoholüberschüsse zu hinreichend chlorarmen Alkoxysilanen zu gelangen, gelingt jedoch bei den Verfahren entsprechend des Standes der Technik nur bei einigen ausgewählten Silanen. Insbesondere Silane mit größeren siliciumgebundenen Alkylgruppen lassen sich mit diesen Verfahren nur äußerst unvollständig alkoxylieren und/oder benötigen große Alkoholüberschüsse.

Aufgabe war daher die Entwicklung eines Verfahrens zur Alkoxylierung von Chlorsilanen, das diese Nachteile der Verfahren entsprechend des Standes der Technik nicht mehr bzw. nur noch in deutlich vermindertem Ausmaß aufweist.

Gegenstand der Erfindung ist ein Verfahren zur kontinuierlichen Herstellung von SiOC-Gruppen enthaltenden Verbindungen (SC), bei dem ein Silan (SI) mit siliciumgebundenen Chloratomen mit einem Alkohol (A) und gegebenenfalls Wasser unter Freisetzung von Chlorwasserstoff umgesetzt wird, wobei zumindest ein Teil der Umsetzung in einer Reaktionskolonne durchgeführt wird, in der die gasförmige Phase (PG) zusammengenommen mindestens 80 Gew.-% Alkohol (A), Chlorwasserstoff und gegebenenfalls Wasser und gegebenenfalls inertes Gas und die flüssige Phase (PF) zusammengenommen mindestens 80 Gew.-% Silan (SI), siliciumhaltige Zwischenprodukte (SB) und SiOC-Gruppen enthaltende Verbindungen (SC) und gegebenenfalls ein inertes Lösungsmittel enthalten, dadurch gekennzeichnet, dass der Alkohol (A) mehrfach durch die flüssige Phase (PF) hindurch geleitet wird
a) indem die Reaktionskolonne mit Einbauten (E) versehen ist, die die Gasphase (PG) in Blasenform durch die flüssige Phase (PF) leiten und/oder
b) indem die Reaktionskolonne mit einem Verdampfer (V) versehen ist, der nach einem Querstromprinzip funktioniert.

Sämtliche Bestandteile sowohl der flüssigen Phase (PF) als auch der Gasphase (PG) addieren sich jeweils auf 100 Gew.-%.

Der nach einem Querstromprinzip funktionierende Verdampfer (V) weist das Charakteristikum auf, dass die aus der Kolonne kommenden, flüssigen siliciumhaltigen Verbindungen (SI), (SB) und/oder (SC) eine Wegstrecke entlang strömen, die mindestens 2 Dosierpunkten für den zu verdampfenden Alkohol (A) aufweist und der Alkohol (A) zumindest teilweise zwischen diesen Dosierpunkten verdampft wird, wobei der verdampfte Alkohol (A) der einzelnen Segmente gebündelt und zumindest in Teilen in die Kolonne überführt wird. Dabei geht der Gasstrom eines Segments nicht durch die flüssige Phase des vorherigen Segments. Die siliciumhaltigen Verbindungen (SI), (SB) und/oder (SC) werden am Ende der Wegstrecke in flüssiger Form gewonnen. D.h. in dem Verdampfer (V) läuft der Strom des zu verdampfenden Alkohols dem Strom der aus der Kolonne kommenden siliciumhaltigen Verbindungen nicht entgegen, sondern "quert" ihn.

Bevorzugt enthält die in der Kolonne befindliche gasförmige Phase (PG) insgesamt mindestens 90 Gew.-% und besonders bevorzugt mindestens 95 Gew.-% Alkohol, Chlorwasserstoff und gegebenenfalls Wasser und gegebenenfalls ein inertes Gas.

Als inertes Gas können beispielsweise Stickstoff, Luft, Edelgase oder verdampfte Lösungsmittel, vorzugsweise leichtflüchtige Lösungsmittel wie Ether (z.B. Diethylether, THF), Ester (z.B. Ethylacetat), Kohlenwasserstoffe (z.B. Methan, Ethan, Propan, Butan), Ketone (z.B. Aceton) verwendet werden. Bevorzugt wird auf die Verwendung eines inerten Gases jedoch verzichtet.

Die in der Reaktionskolonne befindliche flüssige Phase (PF) enthält bevorzugt insgesamt mindestens 90 Gew.-% und besonders bevorzugt mindestens 95 Gew.-% Silan (SI), siliciumhaltige Zwischenprodukte (SB) und SiOC-Gruppen enthaltende Verbindungen (SC) und gegebenenfalls inerte Lösungsmittel.

Inerte Lösungsmitteln sind vorzugsweise aprotische Lösungsmittel oder Lösungsmittelgemische. Beispiele für solche Lösungsmittel sind Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan; Ketone, wie Aceton, Methylethylketon, Di-isopropylketon, Methyl-isobutylketon (MIBK); Ester, wie Ethylacetat, Butylacetat, Prppylpropionat, Ethylbutyrat, Ethyl-isobutyrat; Schwefelkohlenstoff und Nitrobenzol, oder Gemische dieser Lösungsmittel. Schwerflüchtige Lösungsmittel sind bevorzugt, beispielsweise Sulfolan, N-Methylpyrrolidon, DMSO und DMF.

Bevorzugt wird auf die Zugabe eines inerten Lösungsmittels jedoch verzichtet. Die flüssige Phase (PF) enthält vorzugsweise mindestens 80 Gew.-%, bevorzugt mindestens 90 Gew.-% und besonders bevorzugt mindestens 95 Gew.-% Silan (SI), siliciumhaltige Zwischenprodukte (SB) und SiOC-Gruppen enthaltende Verbindungen (SC).

Der bei der Alkoxylierung entstehende Chlorwasserstoff sowie gegebenenfalls noch nicht abreagierte Alkoholmengen werden vorzugsweise am Kopf der Reaktionskolonne abgezogen. Die bei der Alkoxylierung entstehenden SiOC-Gruppen enthaltenden Verbindungen (SC) werden vorzugsweise aus dem Verdampfer (V) gewonnen.

Der Erfindung liegt die überraschende Tatsache zugrunde, dass der erfindungsgemäß erzwungene intensive Kontakt zwischen der flüssigen, die siliciumhaltigen Verbindungen enthaltenden Phase (PF) und dem Alkohol (A) zu einem Produkt (SC) mit deutlich niedrigerem Restgehalt an siliciumgebundenen Chloratomen führt. Dies ist insofern äußerst bemerkenswert, als dass entsprechend des Standes der Technik davon auszugehen war, dass auch eine herkömmliche Füllkörperkolonne mit einem herkömmlichen Verdampfer, z.B. einem Umlaufverdampfer, zu einem hinreichend intensiven Kontakt zwischen beiden o.g, Stoffströmen führt. Dies ist überraschenderweise jedoch nicht der Fall.

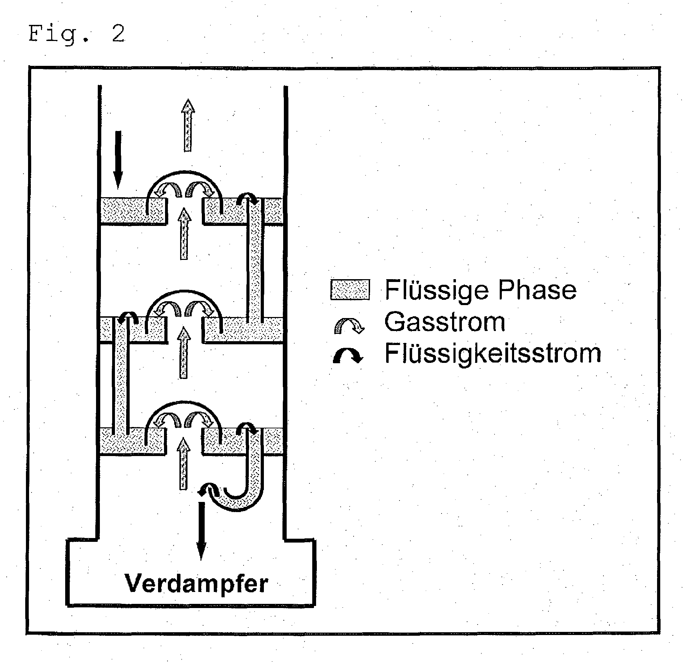

Bevorzugt handelt es sich bei den oben genannten Kolonneneinbauten (E), die den Gasstrom (PG) in Blasenform durch die flüssige Phase (PF) leiten, um Glockenböden. Das Prinzip von Glockenbodenkolonnen ist seit langem bekannt und wird in zahllosen Lehrbüchern, beispielsweise im Organikum, Deutscher Verlag der Wissenschaften, Berlin 1976, ISBN 3-326-00076-6, beschrieben. Zudem wird die Funktionsweise einer Glockenbodenkolonne in Fig. 2 schematisch dargestellt: Während die flüssige Phase (PF) auf jedem Boden steht und durch Überläufe langsam von Boden zu Boden nach unten fließt, strömt der Gasstrom (PG) durch sogenannte Glocken nach oben, wobei er beim Passieren jeder Glocke in Blasenform durch die flüssige Phase (PF) geleitet wird. Vorzugsweise weist ein typischer Glockenboden dabei nicht nur eine sondern zahlreiche mindestens 2, insbesondere mindestens 5 einzelne Glocken auf. Vorzugsweise weisen die Einbauten (E) mindestens 2, besonders bevorzugt mindestens 3, insbesondere mindestens 5 Glockenböden auf.

Derartige Glockenbödenkolonnen sind bislang noch nie für kontinuierliche Alkoxylierungen eingesetzt worden und es ist völlig überraschend, dass sie zu deutlich besseren Ergebnissen führen als die in diesem Prozess etablierten und üblicherweise verwendeten Füllkörperkolonnen, wie sie im Stand der Technik (u.a. EP 1686132) beschrieben werden.

Eine bevorzugte Ausführungsform eines nach dem Querstromprinzip funktionierenden Verdampfers (V) weist mindestens zwei, insbesondere mindestens 4 Segmente auf, durch die die aus der Reaktionskolonne kommende flüssigen Phase (PF) nacheinander strömen muss, wobei in jedem dieser Segmente jeweils Alkohol (A) zudosiert und verdampft wird, und der dabei entstehende gasförmige Alkoholstrom (PG) der einzelnen Segmente gebündelt und zumindest teilweise in die Reaktionskolonne überführt wird. Dabei geht der Gasstrom (PG) eines Segments nicht durch die flüssige Phase (PF) des vorherigen Segments. Die flüssigen SiOC-Gruppen enthaltenden Produkte (SC) werden aus dem letzten Segment ausgetragen.

Bevorzugt wird dabei als Verdampfer (V) ein Poolboiler oder Kettle-Type eingesetzt, dessen Mantelraum durch aufrecht stehende Umlenkbleche in einzelne Segmente aufgeteilt wird, und zwar in mindestens 3, besonders bevorzugt mindestens 4 Segmente. Die aus der Reaktionskolonne kommende, flüssige Phase (PF) muss nach dem Wehrüberlaufprinzip bei den Umlenkblechen durch diese Segmente strömen, wobei in jedem dieser Segmente jeweils Alkohol (A) zugesetzt und verdampft wird, und der dabei entstehende gasförmige Alkoholstrom (PG) der einzelnen Segmente gebündelt und zumindest teilweise in die Reaktionskolonne überführt wird. Im Folgenden wird dieses Verdampfungsprinzip als Segment-Verdampfer (V) bezeichnet.

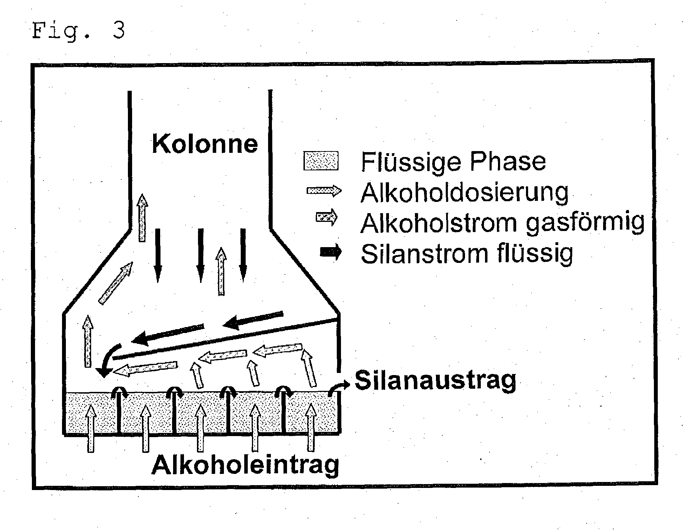

Die Funktionsweise eines typischen Segment-Verdampfers (V) ist in Abbildung 3 schematisch dargestellt: Die aus der Reaktionskolonne kommende flüssige Phase (PF) wird in ein erstes Segment überführt. Von dort fließt sie sukzessive in weitere Segmente, bis sie schließlich aus dem letzten Segment ausgetragen wird. In jedem dieser Segmente wird Alkohol (A) eingetragen und verdampft. Der verdampfte Alkohol (PG) der einzelnen Segmente wird gebündelt und vorzugsweise in die Reaktionskolonne überführt. Dabei geht der Gasstrom eines Segments (PG) nicht durch die flüssige Phase (PF) des vorherigen Segments. Die in die verschiedenen Segmente eingetragene Alkoholmenge (A) kann gleich oder verschieden sein.
Gegebenenfalls kann zur weiteren Reduktion des Restchloridgehaltes in der letzte Segmentkammer neben dem Alkohol (A) auch ein Metallalkoholat, vorzugsweise ein Alkalimetallalkoholat des entsprechenden Alkohols zugegeben werden.

Eine weitere bevorzugte Ausführungsform eines nach dem Querstromprinzip funktionierenden Verdampfers (V) besteht aus einem Fallfilm- oder Dünnschichtverdampfer, bei dem die aus der Reaktionskolonne kommende flüssige Phase (PF) im oberen Fallfilm/Dünnschichterbereich dosiert wird und dann an der Wand des Fallfilm- bzw. Dünnschichtverdampfers entlang läuft, wobei der zu verdampfende Alkohol (A) an mindestens zwei Stellen innerhalb des Fallfilm- oder Dünnschichters dosiert wird. Vorzugsweise wird er an mindestens drei, besonders bevorzugt an mindestens vier unterschiedlichen Stellen dosiert. Die Dosierung des Alkohols (A) kann dabei sowohl durch Öffnungen in der Wand des Fallfilm- bzw. Dünnschichtverdampfers erfolgen, oder indem der Alkohol (A) aus im Inneren des Verdampfers liegenden Dosierstellen gegen die Verdampferwand gespritzt wird.

Der zugesetzte Alkohol (A) wird im Dünnschicht- bzw. Fallfilmverdampfer wenigstens in Teilen verdampft, wobei der dabei entstehende gasförmige Alkoholstrom (PG) zumindest teilweise in die Kolonne überführt wird. Die SiOC-Gruppen enthaltenden Produkte (SC) werden in flüssiger Form an einem Ablauf am Ende der Dünnschichter- bzw. Fallfilmstrecke aus dem Verdampfer ausgetragen.

Typischerweise werden - unabhängig von der konkreten Ausführungsform des Verdampfers (V) - mindestens 60% des im Verdampfers (V) verdampften Alkohols (PG) in die Reaktionskolonne überführt, wobei bevorzugt mindestens 80% des verdampften Alkohols (PG) in die Kolonne überführt werden, und besonders bevorzugt der gesamte verdampfte Alkohol (PG) in die Kolonne überführt wird.

Typischerweise weisen die flüssigen SiOC-Gruppen-haltigen Verbindungen (SC), die aus dem erfindungsgemäßen Verdampfer (V) ausgetragen werden, einen Alkoholgehalt < 8%, bevorzugt <3% und besonders bevorzugt <1% auf.

Um die gewünschten niedrigen Alkoholkonzentrationen in den aus dem Verdampfer (V) ausgetragenen Verbindungen (SC) zu erreichen, ist es vorteilhaft, wenn die Verdampfungstemperatur am Ende der Verdampfungsstrecke höher ist als an deren Anfang. Sofern es sich bei dem Verdampfer (V) um einen Segmentverdampfer handelt, lässt sich dies erreichen, indem im letzten Segment des Verdampfers (V) eine höhere Temperatur herrscht als in allen oder zumindest einigen vorangehenden Segmenten. Besonders günstig ist es, wenn die Temperatur der flüssigen Phase (PF) von Segment zu Segment entsprechend der Fließrichtung ansteigt.

Sofern es sich bei dem Verdampfer (V) um einen der oben beschriebenen Fallfilm- oder Dünnschichtverdampfer handelt, kann das gewünschte Profil der Verdampfungstemperatur durch eine entsprechende Regulierung der Verdampferleistung erreicht werden.

Bei einer bevorzugten Ausführungsform des erfindungsgemäßen Verfahrens wird ein Teil der erfindungsgemäßen Umsetzung in einem Vorreaktor durchgeführt. Der Vorreaktor kann beispielsweise einen Rührkessel, einen Rohrreaktor oder einen Loop-Reaktor mit oder ohne Zwangumlauf umfassen. In diesem Vorreaktor wird das als Edukt dienende Silan (SI) mit Alkohol (A) oder einem Alkohol-Wassergemisch umgesetzt, Der entstehende Chlorwasserstoff wird gasförmig aus dem Reaktionsgemisch entfernt und die entstehende Produktmischung, die noch signifikante Mengen an siliciumgebundenen Chloratomen enthält, wird in eine erste Reaktionskolonne überführt.

Wird das erfindungsgemäße Verfahren nur mit einer Reaktionskolonne durchgeführt, handelt es sich bei dieser ersten Reaktionskolonne um eine Kolonne mit Einbauten (E) und/oder einem Verdampfer (V).

Vorzugsweise wird im Vorreaktor eine gegebenenfalls wasserhaltige Alkohol-Salzsäure-Mischung eingesetzt, die aus der ersten oder - falls vorhanden - aus der zweiten oder einer weiteren Reaktionskolonne stammt.

Bei einer weiteren bevorzugten Ausführung des erfindungsgemäßen Verfahrens wird die erfindungsgemäße Umsetzung zumindest teilweise in zwei oder mehr Reaktionskolonnen durchgeführt. In diesem Fall können sämtliche Reaktionskolonnen oder auch nur eine oder einige der Reaktionskolonnen, mit Einbauten (E) und/oder einem Verdampfer (V) versehen sein. Im letztgenannten Fall ist vorzugsweise die letzte Reaktionskolonne bezüglich der Fließrichtung der flüssigen Phase (PF) mit Einbauten (E) und/oder einem Verdampfer (V) versehen.

Besonders bevorzugt wird das erfindungsgemäße Verfahren in einer Anlage bestehend aus einem Vorreaktor und zwei oder mehr Reaktionskolonnen durchgeführt. In diesem Fall können sämtliche Reaktionskolonnen oder auch nur eine oder einige der Reaktionskolonnen, mit Einbauten (E) und/oder einem Verdampfer (V) versehen sein. Im letztgenannten Fall ist vorzugsweise die letzte Reaktionskolonne bezüglich der Fließrichtung der flüssigen Phase (PF) mit Einbauten (E) und/oder einem Verdampfer (V) versehen.

Die als Edukt dienenden Silane (SI) werden dabei vorzugsweise zunächst im Vorreaktor zu einer teilweisen Umsetzung mit dem Alkohol (A) oder einem Alkohol-Wasser-Gemisch gebracht. Danach wird die flüssige Phase (PF) nacheinander durch die einzelnen Reaktionskolonnen geleitet, in denen die erfindungsgemäße Umsetzung weitergeführt wird. Bevorzugt wird die flüssige Phase (PF) jeweils nahe am Kolonnenkopf dosiert und am Kolonnenfuß bzw. aus dem Verdampfer (V) der jeweiligen Reaktionskolonne aus der Reaktionskolonne entfernt. Eine typische Wegstrecke der flüssigen Phase (PF) durch eine derartige Anlage bestehend aus einem Vorreaktor und mindestens zwei Reaktionskolonnen ist dabei in Fig. 1 schematisch dargestellt. Am Fuß bzw. aus dem Verdampfer (V) der letzten Reaktionskolonne wird das SiOC-Gruppenhaltige Produkt (SC) mit dem oben bereits beschriebenen Alkoholgehalt < 8%, bevorzugt <3% und besonders bevorzugt <1% erhalten.

Auch der gegebenenfalls wässrige Alkohol, das während der Reaktion entstehende Alkohol-Salzsäure-Gemisch bzw. der bei völligem Verbrauch des eingesetzten Alkohols (A) bzw. Alkohol-Wassergemisches in letzter Konsequenz entstehende weitgehend reine Chlorwasserstoff kann so durch die Anlage geführt werden, wie es in Fig. 1 skizziert ist. Gegebenenfalls ist es jedoch günstiger, nicht den gesamten Alkohol (A) bzw. das gesamte Alkohol-Wassergemisch bereits am Fuß bzw. im Verdampfer der Kolonne 2 zuzugeben. So kann einen Teil des Alkohols (A) bzw. des Alkohol-Wassergemisches auch erst an einer anderen Stelle in den Prozess eingebracht werden.

Besonders günstig ist es, wenn ein Teil des Alkohols (A) am Fuß bzw. im Verdampfer der Kolonne 2 zugegeben wird und das am Kopf dieser Kolonne gewonnene Alkohol-Salzsäuregemisch in kondensierter oder gasförmiger Form direkt in den Vorreaktor überführt wird. Der übrige Prozessalkohol wird zumindest zu großen Teilen am Fuß der Kolonne 1 zugegeben. Diese Variante des erfindungsgemäßen Verfahrens hat den Vorteil, dass der in Kolonne 2 freigesetzte Chlorwasserstoff nicht mehr durch Kolonne 1 geleitet wird.

Wenn der erfindungsgemäße Prozess in einer Anlage durchgeführt wird, die aus einem Vorreaktor und mindestens 2 Reaktionskolonnen besteht, und - was eine bevorzugte Ausführungsform der Erfindung darstellt - nur die jeweils letzte Reaktionskolonne bezüglich der Fließrichtung der flüssigen Phase (PF) mit den Einbauten (E) und/oder dem Verdampfer (V) versehen ist, kann es sein, dass in dieser Reaktionskolonne nur noch ein relativ geringer Teil der Gesamtreaktion stattfindet. Trotzdem ist diese Reaktionskolonne mit den Einbauten (E) und/oder dem Verdampfer (V) vorteilhaft, um ein Produkt (SC) mit einem möglichst niedrigen Gehalt an siliciumgebundenen Chloratomen zu erhalten.

Vorzugsweise wird in der Kolonne mit den Einbauten (E) und/oder dem Verdampfer (V) der Gehalt der flüssigen Phase (PF) an siliciumgebundenen Chloratomen um 50% besonders bevorzugt um mindestens 70% oder sogar um mindestens 90% verringert.

Bevorzugt beträgt die Temperatur in den Reaktionskolonnen insbesondere in der oder den Reaktionskolonnen mit Einbauten (E) und/oder einem Verdampfer (V) mindestens 20 °C, besonders bevorzugt mindestens 40 °C, insbesondere mindestens 60 °C und höchstens 160 °C, besonders bevorzugt höchstens 140 °C, insbesondere höchstens 130 °C.

Der im Prozess als Nebenprodukt entstehende gasförmige Chlorwasserstoff wird vorzugsweise von schwerer siedenden Verunreinigungen befreit, die ihrerseits wieder in den Prozess zurückgeführt werden können. Der gasförmige Chlorwasserstoff kann danach als Wertstoff weiter verwendet werden.

Bevorzugt dient das erfindungsgemäße Verfahren zur Herstellung von monomeren Alkoxysilanen, d.h. bei dem erfindungsgemäßen Verfahren werden vorzugsweise Alkohole (A) mit einem Wassergehalt <8%, bevorzugt <4% und besonders bevorzugt <2% eingesetzt.

Bevorzugt werden im erfindungsgemäßen Verfahren Silane (SI) der allgemeinen Formel (1) eingesetzt

RₙSiCl₄₋ₙ (1),

wobei
- **n**: für 0, 1, 2 oder 3 steht, und
- **R**: Wasserstoff oder einen monovalenten substituierten oder nicht substituierten organischen Rest bedeutet.

Sofern mehrere Reste R vorliegen können diese gleich oder verschieden sein.

Beispiele für R sind Wasserstoff und Kohlenwasserstoffreste wie Methyl, Ethyl, Vinyl, n-Propyl, i-Propyl, Allyl, n-Butyl, i-Butyl, t-Butyl, n-Pentyl, i-Pentyl, t-Pentyl, Cyclopentyl, nHexyl, i-Hexyl, t-Hexyl, Cyclohexyl, n-Heptyl, i-Heptyl, t-Heptyl, n-Octyl, i-Octyl, sowie die diversen Regioisomere des Nonyls, Decyls, Undecyls, Dodecyls, Tridecyls, Tetradecyls, Pentadecyls, Hexadecyls, Heptadecyls, Octadecyls etc., Weitere Beispiele sind aromatische Reste R wie Phenyl oder Tolye. Auch können die Reste R substituiert sein, z.B. mit Halogenen, wie z.B. beim Chlormethyl- oder Chlorpropylrest. Die Kohlenwasserstoffreste R weisen vorzugsweise mindestens 1 und höchstens 28, insbesondere höchstens 18 Kohlenstoffatome auf. Bevorzugt sind Alkylreste R. Weitere Beispiele für R sind γ-Acryloxypropyl-, γ-Methacryloxypropyl-, Acryloxymethyl- oder Methacryloxymethylreste.

Bevorzugt wird das erfindungsgemäße Verfahren zur Alkoxylierung der vergleichsweise schwerflüchtigen Silane (SI) der allgemeinen Formel (1) angewendet, die in einem oder mehreren Resten R mindestens 6 Kohlenstoffatome, bevorzugt mindestens 7 und besonders bevorzugt mindestens 10 Kohlenstoffatome enthalten.

So wurde überraschenderweise gefunden, dass sich derartige vergleichsweise schwerflüchtigen Silane (SI) mit entsprechend großen siliciumgebundenen Alkylresten mit den Verfahren entsprechend des Standes der Technik besonders schlecht alkoxylieren lassen. D.h., Restgehalte an siliciumgebundenen Chloratomen unter 50 Gew. -ppm sind bei diesen Silanen (SI) mit diesen Verfahren ohne Nachbehandlung der jeweiligen Produkte meist nicht oder bestenfalls unter Einsatz sehr großer Alkoholüberschüsse erreichbar. Ebenso überraschend war die Entdeckung, dass sich bei diesen Silanen (SI) die Ergebnisse der kontinuierlichen Alkoxylierung durch Einsatz des erfindungsgemäßen Verfahrens deutlich verbessern lassen.

Beispiele für Silane (SI) der allgemeinen Formel (1), für deren Alkoxylierung das erfindungsgemäße Verfahren bevorzugt eingesetzt wird, sind n-Octyl- oder i-Octyl-trichlorsilan.

Besonders bevorzugt wird das erfindungsgemäße Verfahren zur Alkoxylierung der vergleichsweise schwerflüchtigen Silane (SI) der allgemeinen Formel (1) angewendet, die einen Rest R mit mindestens 10 Kohlenstoffatome besitzen, die mindestens 2 Reste R besitzen, von denen einer mindestens 6 Kohlenstoffatome enthält, oder aber die mindestens 2 Reste R besitzen, die beide jeweils mindestens 3 Kohlenstoffatome besitzen. Beispiele für Silane (SI), für deren Alkoxylierung das erfindungsgemäße Verfahren besonders bevorzugt eingesetzt wird, sind Cyclohexylmethyl-dichlorsilan, Cyclohexyl-ethyl-dichlorsilan, Phenylmethyl-dichlorsilan, Phenyl-ethyl-dichlorsilan, Dicyclopentyldichlorsilan, Dicyclopropyl-dichlorsilan, n-Decyltrichlorsilan, n-Undecyltrichlorsilan, n-Dodecyltrichlorsilan, n-Tridecyltrichlorsilan, n-Tetradecyltrichlorsilan, nPentadecyltrichlorsilan, n-Hexaydecyltrichlorsilan, sowie Alkyltrichlorsilane mit noch längeren Alkylketten.

Weitere Beispiele sind Silane (SI) der allgemeinen Formel (1) mit Si-C-gebundenen Polyetherketten, z.B. Polyethylen- oder Polypropylenglycolketten mit 2-20 Polyethereinheiten. Vorzugsweise sind die Polyetherketten dabei über einen Propylspacer an die Silylgruppe gebunden. Dabei ist das erfindungsgemäße Verfahren auch für Mischungen aus polyetherfunktionellen Silanen, in denen die einzelnen Silane Polyetherketten mit unterschiedlicher Kettenlänge aufweisen, geeignet. Besonders bevorzugt sind dabei Silane (S1) der allgemeinen Formel (1), die eine Sigebundene Methylgruppe und eine über einen Propylspacer gebundene Polyetherkette mit 2-10 Ethereinheiten aufweisen.

Als Alkohole können in dem erfindungsgemäßen Verfahren prinzipiell sämtliche Verbindungen mit alkoholischer Hydroxylgruppe eingesetzt werden, deren Siedepunkt unter demjenigen des zu alkoxylierenden Silans liegt. Bevorzugte Alkohole weisen 1 bis 6 Kohlenstoffatome auf. Beispiele sind 2-Methoxy-ethanol, n-Propanol, i-Propanol, n-Butanol, i-Butanol, oder n-Hexanol. Besonders bevorzugt werden Methanol und Ethanol eingesetzt und die entsprechenden Methoxy- bzw. Ethoxysilane hergestellt.

Alternativ können auch Mischungen verschiedener Alkohole, z.B. Ethanol-Methanol-Mischungen, eingesetzt werden, um zu Silanen mit gemischten Alkoxygruppen zu gelangen. Bevorzugt werden jedoch reine Alkohole eingesetzt.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

Im vorliegenden Beispiel wird Hexadecyltrichlorsilan mit Methanol in einer Labordoppelkolonne zu Hexaydecyltrimethoxysilan umgesetzt. Das Silan Hexadecyltrichlorsilan wird mit einem Durchsatz von 100kg/h in den Kopf der ersten Kolonne dosiert und im Gegenstrom mit aufsteigenden Methanoldämpfen zum Hexadecyltrimethoxysilan umgesetzt. Zu diesem Zweck werden 26kg/h Methanol in den Sumpf der ersten Kolonne dosiert. Diese besteht aus 7 Schüssen, welche mit Füllkörpern gefüllt sind. Das teilalkoxylierte Silan wird aus dem Sumpf der ersten Kolonne über einen Zwischenverdampfer in den Kopf der zweiten Kolonne geführt. Die zweite Kolonne besitzt einen Schuss mit 4 Glockenböden im oberen Bereich der Kolonne 2, der zu Vergleichszwecken umfahren werden kann. In den Sumpf der zweiten Kolonne werden 10kg/h Methanol dosiert, um die Alkoxylierung zu vervollständigen. Das Destillat der zweiten Kolonne wird gesammelt und mit dem Silan in den Kopf der ersten Kolonne gegeben. Das Produkt wird im Sumpf der zweiten Kolonne gewonnen.
Die Temperatur im Sumpf der Kolonne 1 beträgt 90°C, während sie im Sumpf der Kolonne 2 140°C beträgt. Dieses Temperaturprofil wird sowohl bei Beispiel A als auch Beispiel B gefahren.

Untenstehende Tabelle zeigt den Vergleich der Variante ohne (Beispiel A) und mit Glockenboden (Beispiel B) sowie die Dosierströme. Bei ansonsten identischen Rahmenbedingungen kann der Restchlorgehalt durch den Einsatz eines einzigen Schusses mit Glockenböden von 600ppm auf 200ppm gesenkt werden.

| | Silan in Kopf Kolonne I | Methanol in Sumpf Kolonne I | Methanol in Sumpf Kolonne II | Rest HCl im Produkt |
|---|---|---|---|---|
| Beispiel A* | 100 | 26 | 10 | 600 |
| Beispiel B | 100 | 26 | 10 | 200 |

| | | | | |
|---|---|---|---|---|
| * nicht erfindungsgemäss | | | | |

## Patentansprüche

1. Verfahren zur kontinuierlichen Herstellung von SiOC-Gruppen enthaltenden Verbindungen (SC), bei dem ein Silan (SI) mit siliciumgebundenen Chloratomen mit einem Alkohol (A) und gegebenenfalls Wasser unter Freisetzung von Chlorwasserstoff umgesetzt wird, wobei zumindest ein Teil der Umsetzung in einer Reaktionskolonne durchgeführt wird, in der die gasförmige Phase (PG) zusammengenommen mindestens 80 Gew.-% Alkohol (A), Chlorwasserstoff und gegebenenfalls Wasser und gegebenenfalls inertes Gas und die flüssige Phase (PF) zusammengenommen mindestens 80 Gew.-% Silan (SI), siliciumhaltige Zwischenprodukte (SB) und SiOC-Gruppen enthaltende Verbindungen (SC) und gegebenenfalls ein inertes Lösungsmittel enthalten,
**dadurch gekennzeichnet, dass** der Alkohol (A) mehrfach durch die flüssige Phase (PF) hindurch geleitet wird
a) indem die Reaktionskolonne mit Einbauten (E) versehen ist, die die Gasphase (PG) in Blasenform durch die flüssige Phase (PF) leiten und/oder
b) indem die Reaktionskolonne mit einem Verdampfer (V) versehen ist, der nach einem Querstromprinzip funktioniert.

2. Verfahren nach Anspruch 1, bei dem der entstehende Chlorwasserstoff am Kopf der Reaktionskolonne abgezogen wird.

3. Verfahren nach Anspruch 1 oder 2, bei dem die Einbauten (E) Glockenböden sind.

4. Verfahren nach Anspruch 3, bei dem die Einbauten (E) mindestens 2 Glockenböden aufweisen.

5. Verfahren nach Anspruch 1 oder 2, bei dem der Verdampfer (V) mindestens zwei Segmente aufweist, durch die die aus der Reaktionskolonne kommende flüssigen Phase (PF) nacheinander strömt, wobei in jedem dieser Segmente jeweils Alkohol (A) zudosiert und verdampft wird, und der dabei entstehende gasförmige Alkoholstrom (PG) der einzelnen Segmente gebündelt und zumindest teilweise in die Reaktionskolonne überführt wird.

6. Verfahren nach Anspruch 5, bei dem der Verdampfer (V) ein Poolboiler oder Kettle-Type ist, dessen Mantelraum durch aufrecht stehende Umlenkbleche in mindestens 3 einzelne Segmente aufgeteilt wird, wobei die aus der Reaktionskolonne kommende, flüssige Phase (PF) nach dem Wehrüberlaufprinzip bei den Umlenkblechen durch diese Segmente strömt, wobei in jedem dieser Segmente jeweils Alkohol (A) zugesetzt und verdampft wird, und der dabei entstehende gasförmige Alkoholstrom (PG) der einzelnen Segmente gebündelt und zumindest teilweise in die Reaktionskolonne überführt wird.

7. Verfahren nach Anspruch 1 bis 6, bei dem Silane (SI) der allgemeinen Formel (1) eingesetzt werden
RₙSiCl₄₋ₙ (1),
wobei
**n** für 0, 1, 2 oder 3 steht, und
**R** Wasserstoff oder einen monovalenten substituierten oder nicht substituierten organischen Rest bedeutet.

8. Verfahren nach Anspruch 1 bis 7, bei dem Silane (SI) einen Rest R mit mindestens 10 Kohlenstoffatome besitzen, oder mindestens 2 Reste R besitzen, von denen einer mindestens 6 Kohlenstoffatome enthält, oder mindestens 2 Reste R besitzen, die beide jeweils mindestens 3 Kohlenstoffatome besitzen.

9. Verfahren nach Anspruch 1 bis 8, bei dem die Alkohole (A) 1 bis 6 Kohlenstoffatome aufweisen.

## Claims

1. Process for continuously preparing compounds (SC) containing SiOC groups, in which a silane (SI) having silicon-bonded chlorine atoms is reacted with an alcohol (A) and optionally water to release hydrogen chloride, at least part of the reaction being performed in a reaction column in which the gaseous phase (PG) contains a total of at least 80% by weight of alcohol (A), hydrogen chloride and any water and any inert gas, and the liquid phase (PF) contains a total of at least 80% by weight of silane (SI), silicon-containing intermediates (SB) and compounds (SC) containing SiOC groups and any inert solvent,
**characterized in that** the alcohol (A) is passed repeatedly through the liquid phase (PF)
a) by virtue of the reaction column being provided with internals (E) which pass the gas phase (PG) through the liquid phase (PF) in bubble form and/or
b) by virtue of the reaction column being provided with a vaporizer (V) which works by a crossflow principle.

2. Process according to Claim 1, in which the hydrogen chloride formed is drawn off at the top of the reaction column.

3. Process according to Claim 1 or 2, in which the internals (E) are bubble-cap trays.

4. Process according to Claim 3, in which the internals (E) have at least 2 bubble-cap trays.

5. Process according to Claim 1 or 2, in which the vaporizer (V) has at least two segments through which the liquid phase (PF) coming from the reaction column flows successively, with metered addition and vaporization of alcohol (A) in each of these segments, and the gaseous alcohol stream (PG) which forms in the individual segments is combined and at least partly transferred into the reaction column.

6. Process according to Claim 5, in which the vaporizer (V) is a poolboiler or kettle type, the shell space of which is divided by upright baffle plates into at least 3 individual segments, and the liquid phase (PF) coming from the reaction column flows through these segments according to the principle of weir overflow at the baffle plates, with addition and vaporization of alcohol (A) in each of these segments, and the gaseous alcohol stream (PG) which forms in the individual segments is combined and at least partly transferred into the reaction column.

7. Process according to Claims 1 to 6, in which silanes (SI) of the general formula (1) are used
RₙSiCl₄₋ₙ (1)
where
**n** is 0, 1, 2 or 3, and
**R** is hydrogen or a monovalent substituted or unsubstituted organic radical.

8. Process according to Claims 1 to 7, in which silanes (SI) have an R radical having at least 10 carbon atoms, or have at least 2 R radicals, one of which contains at least 6 carbon atoms, or have at least 2 R radicals, each of which has at least 3 carbon atoms.

9. Process according to Claims 1 to 8, in which the alcohols (A) have 1 to 6 carbon atoms.

## Revendications

1. Procédé pour la production continue de composés (SC) contenant des groupes SiOC, dans lequel on fait réagir un silane (SI), comportant des atomes de chlore liés au silicium, avec un alcool (A) et éventuellement de l'eau, avec libération de chlorure d'hydrogène, au moins une partie de la réaction étant effectuée dans une colonne de réaction dans laquelle la phase gazeuse (PG) contient pris ensemble au moins 80 % en poids d'alcool (A), du chlorure d'hydrogène et éventuellement de l'eau et éventuellement un gaz inerte et la phase liquide (PF) contient pris ensemble au moins 80 % en poids de silane (SI), des produits intermédiaires siliciés (SB) et des composés (SC) contenant des groupes SiOC et éventuellement un solvant inerte,
**caractérisé en ce qu'**on fait passer plusieurs fois l'alcool (A) à travers la phase liquide (PF)
a) par le fait que la colonne de réaction est munie d'inserts (E) qui conduisent la phase gazeuse (PG) sous forme de bulles à travers la phase liquide (PF) et/ou
b) par le fait que la colonne de réaction est munie d'un vaporiseur (V) qui fonctionne selon le principe des courants croisés.

2. Procédé selon la revendication 1, dans lequel le chlorure d'hydrogène formé est évacué à la tête de la colonne de réaction.

3. Procédé selon la revendication 1 ou 2, dans lequel les inserts (E) sont des plateaux à cloches.

4. Procédé selon la revendication 3, dans lequel les inserts (E) comportent au moins 2 plateaux à cloches.

5. Procédé selon la revendication 1 ou 2, dans lequel le vaporiseur (V) comporte au moins deux segments, à travers lesquels la phase liquide (PF) provenant de la colonne de réaction s'écoule successivement, dans chacun de ces segments de l'alcool (A) étant chaque fois introduit par addition dosée et vaporisé, et le courant d'alcool gazeux (PG) des segments individuels qui en résulte est regroupé et au moins en partie transféré dans la colonne de réaction.

6. Procédé selon la revendication 5, dans lequel le vaporiseur (V) est un type poolboiler ou kettle, dont l'espace interne de l'enveloppe est divisé en au moins 3 segments individuels par des chicanes déflectrices droites, la phase liquide (PF) provenant de la colonne de réaction, s'écoulant à travers ces segments selon le principe du trop-plein dans les chicanes déflectrices, dans chacun de ces segments l'alcool (A) étant chaque fois ajouté et vaporisé, et le flux d'alcool gazeux (PG) des segments individuels qui en résulte étant regroupé et au moins en partie transféré dans la colonne de réaction.

7. Procédé selon l'une quelconque des revendications 1 à 6, dans lequel on utilise des silanes (SI) de formule générale (1)
RₙSiCl₄₋ₙ (1)
dans laquelle
n est 0, 1, 2 ou 3, et
R représente un atome d'hydrogène ou un radical organique monovalent substitué ou non substitué.

8. Procédé selon l'une quelconque des revendications 1 à 7, dans lequel les silanes (SI) comportent un radical R ayant au moins 10 atomes de carbone, ou comportent au moins 2 radicaux R dont l'un contient au moins 6 atomes de carbone, ou comportent au moins 2 radicaux R qui ont chacun au moins 3 atomes de carbone.

9. Procédé selon l'une quelconque des revendications 1 à 8, dans lequel les alcools (A) comportent de 1 à 6 atomes de carbone.
